# EUROPEAN PATENT SPECIFICATION

(11) **EP 0 979 856 B1**
(45) Date of publication and mention of the grant of the patent: **17.09.2003**
(21) Application number: 99114956.8
(22) Date of filing: 30.07.1999
(51) Int. Cl.: C09K 17/48, E21B 33/138

(54) **Use of an Excavation-stabilizing slurry, production process therefor and excavation method**
Aufschlämmung zur Aushölungsverfestigung, Herstellung und Aushölungsmethode
Boue de stabilisation d'une excavation, sa préparation et méthode d'excavation

(30) Priority: 10.08.1998 JP 22600898
(43) Date of publication of application: 16.02.2000
(73) Proprietor: Nippon Shokubai Co., Ltd., Osaka-shi, Osaka 541-0043 (JP)
(72) Inventor: Kono, Katsuyuki, Takatsuki-shi, Osaka 569-0854 (JP); Kikuta, Teruo, Nagaokakyo-shi, Kyoto 617-0856 (JP)
(74) Representative: Glawe, Delfs, Moll & Partner

(56) References cited:
- WO-A-98/34994
- DE-B- 1 209 513
- US-A- 2 801 984
- US-A- 4 366 194
- US-A- 4 413 680
- US-A- 4 534 412
- US-A- 4 607 066

## Description

### BACKGROUND OF THE INVENTION

### A. TECHNICAL FIELD

The present invention relates to the use of an excavation-stabilizing slurry for preventing the collapse of trench walls and so on ; and an excavation method involving the use of the excavation-stabilizing slurry.

### B. BACKGROUND ART

In boring constructions such as subway construction works, the stabilization of trench walls is usually attempted by using an excavation-stabilizing slurry (which might be called excavation mud flush) containing bentonite in order to prevent the collapse of the trench walls. In recent years, an excavation-stabilizing slurry with a saved bentonite content is used in the subway construction works and so on in view of the easiness of waste mud treatment in disposing of the used excavation-stabilizing slurry. In the case where the content of the bentonite in the excavation-stabilizing slurry is saved, the viscosity of the excavation-stabilizing slurry decreases to deteriorate the ability to stabilize the. trench walls (fluid loss), or the bentonite settles to disable the use of the excavation-stabilizing slurry. To solve such problems, thickeners such as carboxymethyl cellulose (CMC) are usually mixed into the excavation-stabilizing slurry. However, there are problems in that the CMC easily spoils, or in that the CMC is so difficult to disperse that no excavation-stabilizing slurry having stable properties is obtainable.

To solve the above problems, JP-A-133084/1985 discloses a mud material composition as prepared by mixing a bentonite dispersion with a water-in-oil type polymer emulsion as obtained by water-in-oil type emulsion polymerization of a monomer including sodium acrylate. However, there are problems in that, because of inflammability, such a composition is difficult to handle and is designated as a dangerous thing under the fire law, and further in that oil mingles with waste mud.

DE 1 209 513 B discloses a method for sealing and solidifying ground formations to render them water-impermeable, using a sealing agent comprising a mixture of polymers and alkali hydroxide. The sealing agent is introduced in finely divided form into the ground, such as by injection or pressing, and the polymer and alkali hydroxide reacts to form a gel which seals the ground. US-A-4,366,194 discloses a method for rendering a porous structure, such as porous subterranean formations, impermeable by treatment with gelable compositions of amide polymers. The polymer composition together with an alkaline solution is forced by pressure into the porous structure where it forms a gel which provides the desired plugging of the porous structure. Both aforementioned documents are not concerned with the problem of excavating trenches or other cavities in the ground while preventing the walls of such trench or cavity to collapse during the excavation operation.

### SUMMARY OF THE INVENTION

### A. OBJECTS OF THE INVENTION

Therefore, an object of the present invention is to provide: the use of an excavation-stabilizing slurry which merely spoils with difficulty, and has high viscosity and low fluid loss; and an excavation method involving the use of the excavation-stabilizing slurry.

### B. DISCLOSURE OF THE INVENTION

The present inventors diligently studied and made experiments to solve the above problems. As a result, the inventors completed the present invention by finding that the above problems are all solved by an excavation-stabilizing slurry comprising an emulsion containing a thickenable polymer which thickens due to its reaction upon an alkaline substance.

That is to say, an excavation-stabilizing slurry, for use according to the present invention, comprises an emulsion containing a polymer which thickens with an alkaline substance.

In an excavation-stabilizing slurry, for use according to the present invention, by adding an alkaline substance to an emulsion containing a polymer which thickens with the alkaline substance, thus adjusting the pH of the emulsion to 6 or more, it is possible to thicken the emulsion.

An excavation method, according to the present invention, is a method comprising the step of excavating the earth while the collapse of the resultant trench walls is prevented using the excavation-stabilizing slurry as mentioned immediately above.

These and other objects and the advantages of the present invention will be more fully apparent from the following detailed disclosure.

### DETAILED DESCRIPTION OF THE INVENTION

### (Emulsion):

The emulsion, as used in the present invention, contains a polymer which thickens with an alkaline substance (hereinafter, this polymer is referred to as thickenable polymer), and such thickening raises the viscosity of the excavation-stabilizing slurry, thus improving its fluid loss. The above emulsion is an emulsion comprising the thickenable polymer as dispersed in a water medium, namely, an aqueous emulsion, and is less inflammable and has higher safety than water-in-oil type polymer emulsions.

The emulsion, as used in the present invention, can be obtained by emulsion polymerization of a monomer component in water. The thickenable polymer, which is contained in the emulsion as obtained by the emulsion polymerization, is featured in that the molecular weight is great and in that the fluid loss is low because the thickenability is high.

Examples of the monomer component include components which comprises a polymerizable monomer (A) containing a group of which the hydrophilicity increases with the alkaline substance, wherein the above components may further comprise another polymerizable monomer. Examples of the group, of which the hydrophilicity increases with the alkaline substance, include: add groups, such as a carboxyl group, a phosphoric acid group, and a sulfonic acid group; and groups to easily hydrolyze to form the acid groups, such as carboxylate ester groups, sulfonate ester groups, and phosphate ester groups.

Examples of the polymerizable monomer (A) include: carboxyl-group-containing polymerizable monomers, such as (meth)acrylic acid, itaconic acid, crotonic acid, maleic acid, and maleic anhydride; sulfonic-acid-group-containing polymerizable monomers, such as vinylsulfonic acid, styrenesulfonic acid, and sulfoethyl (meth)acrylate; polymerizable monomers having higher hydrolyzability than butyl acrylate in an aqueous alkali solution of pH 10, for example, carboxylate-ester-group-containing polymerizable monomers to comparatively easily hydrolyze to form the acid group, such as methyl acrylate, ethyl acrylate, and hydroxyethyl acrylate; and acid-phosphate-ester-group-containing polymerizable monomers, such as 2-(meth)acryloyloxyethyl acid phosphate, 2-(meth)acryloyloxypropyl acid phosphate, 2-(meth)acryloyloxy-3-chloropropyl acid phosphate, and 2-(meth)acryloyloxyethylphenyl phosphate. These may be used either alone respectively or in combinations with each other.

Examples of other polymerizable monomers include: styrenic polymerizable monomers, such as styrene, vinyltoluene, α-methylstyrene, and chloromethylstyrene; (meth)acrylamidic polymerizable monomers, such as (meth)acrylamide, N-monomethyl(meth)acrylamide, N-monoethyl(meth)acrylamide, and N,N-dimethyl(meth)acrylamide; (meth)acrylate-esteric polymerizable monomers, which are esters of methacrylic add with alcohols containing 1∼18 carbon atoms (but not including cyclic alcohols), such as methyl methacrylate, ethyl methacrylate, and butyl methacrylate, or esters of acrylic acid with alcohols containing 4∼18 carbon atoms (but not including cyclic alcohols); cyclohexyl-group-containing polymerizable monomers, such as cyclohexyl (meth)acrylate; hydroxyl-group-containing (meth)acrylate-esteric polymerizable monomers, which are monoesters of (meth)acrylic acid with polyalkylene glycol, such as 2-hydroxyethyl methacrylate and 2-hydroxypropyl (meth)acrylate; polyethylene-glycol-chain-containing polymerizable monomers, such as polyethylene glycol (meth)acrylate esters (but not including 2-hydroxyethyl acrylate); vinyl acetate; (meth)acrylonitrile; basic polymerizable monomers, such as N-vinylpyrrolidone, dimethylaminoethyl (meth)acrylate, dimethylaminoethyl(meth)acrylamide, dimethylaminopropyl(meth)acrylamide, vinylpyridine, and vinylimidazole; crosslinkable (meth)acrylamidic polymerizable monomers, such as N-methylol(meth)acrylamide and N-butoxymethyl(meth)acrylamide; polymerizable monomers containing a hydrolyzable silicon group as directly linked to a silicon atom, such as vinyltrimethoxysilane, vinyltriethoxysilane, y-(meth)acryloylpropyltrimethoxysilane, vinyltris(2-methoxyethoxy)silane, and allyltriethoxysilane; epoxy-group-containing polymerizable monomers, such as glycidyl (meth)acrylate and acryl glycidyl ether; oxazoline-group-containing polymerizable monomers, such as 2-isopropenyl-2-oxazoline and 2-vinyloxazoline; aziridine-group-containing polymerizable monomers, such as 2-aziridinylethyl (meth)acrylate and (meth)acryloylaziridine; halogen-group-containing polymerizable monomers, such as vinyl fluoride, vinylidene fluoride, vinyl chloride, and vinylidene chloride; polyfunctional (meth)acrylate-esteric polymerizable monomers having at least two polymerizable unsaturated groups per molecule, for example, esterified products from (meth)acrylic acid and polyhydric alcohols such as ethylene glycol, 1,3-butylene glycol, diethylene glycol, 1,6-hexanediol, neopentyl glycol, polyethylene glycol, propylene glycol, polypropylene glycol, trimethylolpropane, pentaerythritol, and dipentaerythritol; polyfunctional (meth)acrylamidic polymerizable monomers having at least two polymerizable unsaturated groups per molecule, such as methylene(meth)acrylamide; polyfunctional allylic polymerizable monomers having at least two polymerizable unsaturated groups per molecule, such as diallylphthalate, diallylmaleate, and diallylfumarate; allyl (meth)acrylate and divinylbenzene. These may be used either alone respectively or in combinations with each other.

As to the monomer component, it is preferable to use monomer components comprising (meth)acrylic acid and a (meth)acrylate ester, because the use of such monomer components enhances the viscosity of the excavation-stabilizing slurry to result in low fluid loss. As to the monomer component, it is the most preferable to use monomer components comprising methacrylic acid and an acrylate ester, because the use of such monomer components enhances the viscosity of the excavation-stabilizing slurry to result in low fluid loss.

The emulsion polymerization of the polymerizable monomer is preferably carried out using an emulsifier or polymerization initiator.

The emulsifier is not especially limited, but examples thereof include anionic surfactants, nonionic surfactants, cationic surfactants, amphoteric surfactants, high-molecular surfactants, and their reactive surfactants.

Examples of the anionic surfactant include: alkylsulfate salts, such as sodium dodecylsulfate, potassium dodecylsulfate, and ammonium alkylsulfate; sodium dodecyl polyglycol ether sulfate; alkylsulfonates, such as sodium sulforicinoleate and sulfonated paraffin; alkylsulfonates, such as sodium dodecylbenzenesulfonate and alkaline-metal sulfates of alkaline phenol hydroxyethylene; higher-alkylnaphthalenesulfonate salts; condensed products from naphthalenesulfonic acid and formalin; fatty acid salts, such as sodium laurate, triethanolamine oleate, and triethanolamine abietate; polyoxyalkyl ether sulfate ester salts; polyoxyethylene carboxylate ester sulfate ester salts; polyoxyethylene phenyl ether sulfate ester salts; dialkyl succinate sulfonate salts; and reactive anionic emulsifiers having a double bond, such as polyoxyethylene alkylarylsulfate salts. These may be used either alone respectively or in combinations with each other.

Examples of the nonionic surfactant include: polyoxyethylene alkyl ethers; polyoxyethylene alkyl aryl ethers; sorbitan aliphatic esters; polyoxyethylene sorbitan aliphatic esters; aliphatic monoglycerides, such as monolaurate of glycerol; poly(oxyethylene-oxypropylene) copolymers; condensed products from ethylene oxide with aliphatic amines, amides, or acids. These may be used either alone respectively or in combinations with each other.

Examples of the high-molecular surfactant include: polyvinyl alcohols and their denatured products; (meth)acrylic water-soluble polymers; hydroxyethyl(meth)acrylic water-soluble polymers; hydroxypropyl (meth) acrylic water-soluble polymers; and polyvinylpyrrolidone. These may be used either alone respectively or in combinations with each other.

The polymerization initiator is a substance that decomposes due to heat to generate radical molecules, and examples thereof include: persulfate salts, such as potassium persulfate, ammonium persulfate, sodium persulfate; water-soluble azo compounds, such as 2,2'-azobis(2-amidinopropane) dihydrochloride, and 4,4'-azobis(4-cyanopentanoic acid); pyrolyzable initiators, such as hydrogen peroxide; redox polymerization initiators, such as a combination of hydrogen peroxide with ascorbic acid, a combination of t-butyl hydroperoxide with Rongalit, a combination of potassium persulfate with metallic salts, and a combination of ammonium persulfate with sodium hydrogensulfite. These may be used either alone respectively or in combinations with each other.

The polymerization temperature, at which the emulsion polymerization of the polymerizable monomer is made, is not especially limited, but is preferably in the range of 0∼100 °C, more preferably 40∼95 °C.

The polymerization time, for which the emulsion polymerization of the polymerizable monomer is made, is not especially limited, but is preferably in the range of 3∼15 hours.

When the emulsion polymerization is made, a material such as a hydrophilic solvent or an additive can be added if no bad influence is given to the properties of the resultant thickenable polymer.

The method to add the polymerizable monomer to the emulsion polymerization reaction system is not especially limited, but examples thereof, as used, include: an all-at-once addition method; a polymerizable-monomer-dropping method; a pre-emulsion method; a power feed method; a seed method; and a multistep addition method.

The content of the nonvolatile component (thickenable polymer) in the emulsion, resultant from the emulsion polymerization reaction, is preferably 60 weight % or below. In the case where the nonvolatile content exceeds 60 weight %, the viscosity of the emulsion might be too high, or the emulsion might coagulate because the dispersion stability could not be kept.

The mechanism, by which the emulsion of the present invention thickens, is presumed as follows: the hydrophilicity of the thickenable polymer in the emulsion increases with the alkaline substance, and part or the whole of the polymer dissolves into water, or emulsion particles swell, or both of them occur. If the whole of the thickenable polymer in the emulsion dissolves, the weight-average molecular weight of this polymer is preferably 100,000 or more. In the case where the weight-average molecular weight of the polymer is less than 100,000, the thickenability might be so inferior that the fluid loss of the resultant excavation-stabilizing slurry might be much. As to emulsions as obtained from the crosslinkable polymerizable monomer, the measurement of the molecular weight might be impossible because of the resultant crosslinking structure, but such emulsions thicken due to the swelling of the emulsion particles.

The average particle diameter of the thickenable polymer is not especially limited, but is preferably in the range of 40 nm∼1 µm, more preferably 50∼500 nm. In the case where the average particle diameter of the thickenable polymer is below 40 nm, the polymerization stability might be low during the production of the thickenable polymer, or the viscosity of the thickenable polymer might be too high. On the other hand, in the case where the average particle diameter exceeds 1 µm, speedy thickening might be difficult even if the alkaline substance is added, so the excavation-stabilizing slurry having the stable properties might not be obtainable.

The thickenable polymer is a polymer which thickens due to its reaction upon an alkaline substance, and examples thereof include: polymers containing a carboxyl group in their molecules; and polymers containing, in their molecules, groups, such as carboxylate ester groups, sulfonate ester groups, and phosphate ester groups, to easily hydrolyze to form acid groups. Among these thickenable polymers, those containing a carboxyl group are preferable, because they are easily available, and their neutralization reactions run speedily due to the addition of the alkaline substance to give carboxylate ions having high hydrophilicity.

Preferable ones of the thickenable polymers containing a carboxyl group are polymers in which the monomer unit containing a carboxyl group occupies 3∼80 mol %, more preferably 10∼60 mol %, of all repeating units. In the case where the monomer unit containing a carboxyl group merely occupies below 3 mol % of all repeating units, the thickenability might be so inferior that the fluid loss might be much. On the other hand, in the case where the monomer unit containing a carboxyl group occupies more than 80 mol % of all repeating units, the polymerization stability might be so low that the coagulation might occur, or that a large amount of coagulation might be formed.

The emulsion, as used in the present invention, is not limited to the product of the above emulsion polymerization, but may be other ones, 5 for example, a product by re-dispersing a product of microsuspension polymerization or solution polymerization.

Examples of the emulsion include an emulsion having the thickening properties such that an aqueous solution, as prepared by diluting the emulsion with water to adjust its solid content to 1 weight %, will have a viscosity of 1∼1,000 mPa·s, preferably 1∼500 mPa·s, more preferably 1∼100 mPa·s, and that if the alkaline substance is added to this aqueous solution to adjust its pH to 9, the viscosity will increase to 2∼10,000 times, preferably 2∼8,000 times, more preferably 2∼5,000 times.

Examples of the emulsion having the above viscosity properties include an emulsion comprising a polymer (thickenable polymer) containing a functional group which undergoes a neutralization or hydrolysis reaction with the alkaline substance to enhance the hydrophilicity to swell emulsion particles with water or dissolve those particles into water, thus raising the viscosity of the whole.

The excavation-stabilizing slurry according to the present invention is a slurry comprising the above-described emulsion, and may undergo addition thereto of the alkaline substance or additives such as clay minerals or antifoaming agents at an arbitrary time, for example, during the preparation of the emulsion or just before the execution. In addition, similarly, other materials such as water may also be mixed.

### (Alkaline substance):

The alkaline substance, as used in the present invention, thickens the thickenable polymer. Examples of the alkaline substance include sodium hydroxide, potassium hydroxide, sodium carbonate, ammonia (water), and amines. These may be used either alone respectively or in combinations with each other.

### (Clay mineral):

The clay mineral, usable in the present invention, gives the fundamental viscosity properties and the low fluid loss to the excavation stabilizing slurry. Examples of the clay mineral include not only bentonite, but also sepiolite, attapulgite, ettringite, kaolinite, montmorillonite, hectorite, saponite, beidellite, zeolite, palygorskite, and mica. These may be used either alone respectively or in combinations with each other. What is preferable among them is at least one member selected from the group consisting of bentonite, sepiolite, attapulgite, ettringite, and kaolinite, because they give low fluid loss.

### (Additives such as antifoaming agents):

The excavation-stabilizing slurry may comprise not only the above components, but also additives, of which the examples include: antifoaming agents, such as silicone antifoaming agents, pluronic type antifoaming agents, and mineral antifoaming agents; dispersants, such as polyacrylic dispersants; water-soluble polymers, such as CMC, polyacrylamide, and polyvinyl alcohol. Among them, the antifoaming agent is preferable, because the mixing thereof facilitates the handling. If the antifoaming agent is at least one member selected from the group consisting of silicone antifoaming agents and pluronic type antifoaming agents, the foaming is suppressed during the production or use of the excavation-stabilizing slurry.

The ratio between the above components constituting the excavation-stabilizing slurry is not especially limited, but, per 100 weight parts of the excavation-stabilizing slurry, the solid content of the emulsion is preferably in the range of 0.01∼20 weight parts (more preferably 0.05∼10 weight parts), and the clay mineral is preferably in the range of 0.1∼20 weight parts (more preferably 0.5∼10 weight parts). In the case where the solid content of the emulsion is below 0.01 weight part, the viscosity might be so low that the fluid loss might be much. On the other hand, in the case where the solid content of the emulsion exceeds 20 weight parts, the viscosity of the excavation-stabilizing slurry might be so excessively high that the excavation-stabilizing slurry might be difficult to handle. In the case where the clay mineral is below 0.1 part, the fluid loss might be much. On the other hand, in the case where the clay mineral exceeds 20 weight parts, the viscosity might be too high.

The amount of the alkaline substance constituting the excavation-stabilizing slurry is not especially limited if the amount is such as needed for adjusting the pH of the excavation-stabilizing slurry to 6 or more. However, the upper limit of such an amount is preferably such that the pH of the excavation-stabilizing slurry will be 13 or less. In the case where the pH of the excavation-stabilizing slurry is below 6, the viscosity of the excavation-stabilizing slurry might be low. On the other hand, in the case where the pH of the excavation-stabilizing slurry exceeds 13, the fluid loss of the excavation-stabilizing slurry might be much.

The excavation-stabilizing slurry can further comprises additives to such an extent that the fluid loss may not increase. Many of excavation-stabilizing slurries generally contain an emulsifier, and therefore have problems of foaming, so it is preferable to add the antifoaming agent. The amount of the antifoaming agent, as added, is not especially limited, but is preferably in the range of 0.001∼3 weight parts, more preferably 0.01∼1 weight part, per 100 weight parts of the excavation-stabilizing slurry. In the case where the amount of the antifoaming agent, as added, is below 0.001 weight part, almost no antifoaming effect might be obtainable. On the other hand, in the case where the amount of the antifoaming agent, as added, exceeds 3 weight parts, the antifoaming agent might separate from the excavation-stabilizing slurry, or the fluid loss might be much.

The water content of the excavation-stabilizing slurry is not especially limited, but is preferably in the range of 80∼99.9 weight parts, more preferably 90∼99 weight parts, per 100 weight parts of the excavation-stabilizing slurry. In the case where the water content is below 80 weight parts, the viscosity of the excavation-stabilizing slurry might be too high. On the other hand, in the case where the water content exceeds 99.9 weight parts, the viscosity of the excavation-stabilizing slurry might be too low, or the fluid loss might be much.

The excavation-stabilizing slurry according to the present invention is used for preventing the collapse of trench walls in constructions such as boring constructions. If treatments such as slime treatment are carried out using the excavation-stabilizing slurry, the trench walls are stabilized, so that the collapse thereof is prevented.

The production process for the excavation-stabilizing slurry is not especially limited, but examples thereof include processes comprising the step of adding the above components, such as alkaline substances, clay minerals, water, or antifoaming agents, in arbitrary order, to the emulsion which is the essential component. In the case where the alkaline substance is added, a preferable one among the above processes is a process comprising the step of adjusting the pH as the whole to 6 or more to increase the viscosity to higher than that of the original emulsion, thus producing the excavation-stabilizing slurry. Such a process can simply produce an excavation-stabilizing slurry which merely spoils with difficulty, and has high viscosity and low fluid loss.

### (Excavation Method):

The excavation method according to the present invention comprises the step of excavating the earth while the collapse of the resultant trench walls is prevented using the present invention excavation-stabilizing slurry. If, while trenches such as tunnels are formed in the earth using excavators such as drills, BW excavators, bucket type hydro phrase excavators, and electromills, the excavation-stabilizing slurry is filled into the resultant trenches, then the excavation-stabilizing slurry penetrates the trench walls to form a mud wall layer in the neighborhood of surfaces of the trench walls, wherein the mud wall layer is called mudcake and is almost impermeable with water. This mud wall layer has so high sealability that it can reinforce the trench walls. Because the water pressure of the excavation-stabilizing slurry is higher than the groundwater pressure, it is possible to prevent the collapse of trench walls, wherein the collapse is caused by the exceeding of the self-standing height of the soil or by other factors such as groundwater pressure.

The excavation method, according to the present invention, can be applied, for example, to methods of excavating the earth, such as subterranean continuous wall methods, shielding methods, and subterranean piling methods.

### (Effects and Advantages of the Invention):

The excavation-stabilizing slurry, according to the present invention, merely spoils with difficulty, and has high viscosity and low fluid loss.

The present invention production process for an excavation-stabilizing slurry can simply produce the excavation-stabilizing slurry.

5 The excavation method, according to the present invention, can surely prevent the collapse of trench walls, because this method involves the use of the above excavation-stabilizing slurry.

### DETAILED DESCRIPTION OF THE PREFERRED EMBODIMENTS

Hereinafter, the present invention is more specifically illustrated by the following examples of some preferred embodiments in comparison with comparative examples not according to the invention. However, the invention is not limited to the below-mentioned examples. Hereinafter, the units "%" and "part(s)" denote those by weight.

Emulsions (1)∼(3), as used in the examples, were produced in accordance with Production Examples 1∼3 below.

### -PRODUCTION EXAMPLE 1-

First, 666 parts of ion-exchanged water and 9 parts of Hitenol N-08 (made by Dai-ichi Kogyo Seiyaku Co., Ltd.) were charged into a flask as equipped with a dropping funnel, a stirrer, a nitrogen-introducing tube, a thermometer, and a condenser. The Hitenol N-08 was completely dissolved by stirring at 72 °C. With the temperature of the resultant aqueous solution containing the Hitenol N-08 kept at 72 °C, the internal atmosphere of the flask was replaced with nitrogen. Thereafter, 30 parts out of a monomer mixture, comprising 105 parts of methacrylic acid and 195 parts of ethyl acrylate, was dropped from the dropping funnel, and then the stirring was carried out for 5 minutes. Next, 25 parts of 5 % aqueous potassium persulfate solution was added, and then the stirring was continued for 10 minutes with the temperature kept at 72 °C, thus carrying out initial polymerization. The remainder, 270 parts, of the above monomer mixture was dropped to the reaction mixture in the flask over a period of 2 hours. After the end of the dropping, the stirring was continued for 1 hour with the temperature kept at 72 °C, and then the reaction mixture was cooled to finish the polymerization, thus obtaining an emulsion (1) having a nonvolatile component concentration of 31.0 % and containing a thickenable polymer.

### -PRODUCTION EXAMPLE 2-

An emulsion (2), having a nonvolatile component concentration of 30.9 % and containing a thickenable polymer, was obtained in the same way as of Production Example 1 except that a mixture of 60 parts of methacrylic acid, 180 parts of methyl acrylate, and 60 parts of hydroxyethyl acrylate was used as the monomer mixture.

### -PRODUCTION EXAMPLE 3-

First, 327 parts of ion-exchanged water and 4 parts of Hitenol N-08 (made by Dai-ichi Kogyo Seiyaku Co., Ltd.) were charged into a flask as equipped with two dropping funnels, a stirrer, a nitrogen-introducing tube, a thermometer, and a condenser. The Hitenol N-08 was completely dissolved by stirring at 72 °C. With the temperature of the resultant aqueous solution containing the Hitenol N-08 kept at 72 °C, the internal atmosphere of the flask was replaced with nitrogen. Thereafter, 30 parts out of a pre-emulsion, as obtained by vigorously stirring a mixture of 105 parts of methacrylic acid, 195 parts of methyl acrylate, and 300 parts of 1.6 % aqueous Hitenol N-08 solution, was dropped from the dropping funnel, and then the stirring was carried out for 5 minutes. Next, 1 part of 5 % aqueous sodium hydrogensulfite solution and 4 parts of 1 % aqueous ammonium persulfate solution were added, and then the stirring was continued for 20 minutes with the temperature kept at 72 °C, thus carrying out initial polymerization. The remainder, 570 parts, of the above pre-emulsion and 64 parts of 1 % aqueous ammonium persulfate solution were dropped to the reaction mixture in the flask over a period of 2 hours. After the end of the dropping, the reaction temperature was raised to 80 °C, and then the stirring was continued for 1 hour, and then the reaction mixture was cooled to finish the polymerization, thus obtaining an emulsion (3) having a nonvolatile component concentration of 30.8 % and containing a thickenable polymer.

### -EXAMPLE 1-

The emulsion (1), as obtained in the above Production Example 1, was weighed such that its solid content in 600 ml in final total amount of the excavation-stabilizing slurry would be 0.05 weight %, and then the weighed emulsion (1) was put into a stainless cup. Then, into this cup, tap water was added in such an amount that the total amount, including 0.1 N aqueous sodium hydroxide solution as used for neutralization, would be 600 ml. Furthermore, NOPCO 8034L (made by SAN NOPCO LIMITED), which is a silicone antifoaming agent, was added in the ratio of 0.1 % of the total amount.

Next, Kunigel VI (made by Kunimine Industries Co., Ltd.), which is bentonite, was added in the ratio of 3 % of the total amount, and the resultant mixture was stirred speedily at a revolution velocity of 1,200 rpm for 15 minutes with a Hamilton beach mixer. Incidentally, a predetermined amount (as shown in Table 1) of 0.1 N aqueous sodium hydroxide solution was added just after the initiation of the stirring. After the end of the stirring, the mixture was left stationary for 24 hours, and then stirred for 15 minutes with the Hamilton beach mixer again, thus obtaining an excavation-stabilizing slurry (1a), of which the funnel viscosity and the fluid loss were measured by the below-mentioned methods according to test methods of the AMERICAN PETROLEUM INSTITUTE (API). Results are shown in Table 1.

Excavation-stabilizing slurries (1b)∼(1e) were obtained to measure the funnel viscosity and the fluid loss in the same way as above except that the emulsion (1) was weighed such that its solid content in 600 ml in final total amount of each of the excavation-stabilizing slurries would be 0.1, 0.2, 0.3 and 0.5 weight % respectively. Results are shown in Table 1.

In the case (blank) where neither the emulsion (1) nor the 0.1 N aqueous sodium hydroxide solution was added in the above procedure, the pH was 11.5, the funnel viscosity was 19.5 (sec), and the fluid loss was 23.2 (ml).

### Funnel viscosity:

An amount of 500 ml of the above excavation-stabilizing slurry was put into a funnel type funnel viscometer to measure the time as needed for flowing out of the entirety of the excavation-stabilizing slurry.

### Measurement of fluid loss

An amount of 290 ml of the stabilizing slurry was put into a cylinder (inner diameter: 76.2 mm) of a fluid loss measurement apparatus. Then, Toyo filter paper No. 4 of 9 cm in diameter was put, and a cover with a drain was set. The cylinder was fixed in a predetermined position, and a measuring cylinder was set. Thereafter, a pressure (3 kg/cm²) was applied into the cylinder using a nitrogen bottle, and the amount (ml) of water flowing out for 30 minutes was measured with the measuring cylinder.

### -EXAMPLE 2-

Excavation-stabilizing slurries (2a)∼(2e) were obtained to measure the funnel viscosity and the fluid loss in the same way as of Example 1 except that the emulsion (1) was replaced with the emulsion (2) as obtained in Production Example 2. Results are shown in Table 1.

### -EXAMPLE 3-

Excavation-stabilizing slurries (3a)∼(3e) were obtained to measure the funnel viscosity and the fluid loss in the same way as of Example 1 except that the emulsion (1) was replaced with the emulsion (3) as obtained in Production Example 3. Results are shown in Table 1.

### -COMPARATIVE EXAMPLE 1-

First, 600 ml of tap water, 18 g of Kunigel VI (made by Kunimine Industries Co., Ltd.), which is bentonite, and Telcellulose DS-P (made by Telnite Co., Ltd.) as weighed such that its solid content in 600 ml in final total amount of the excavation-stabilizing slurry would be 0.05 weight %, were placed into a stainless cup, and then stirred speedily at a revolution velocity of 1,200 rpm for 15 minutes with a Hamilton beach mixer. After the end of the stirring, the mixture was left stationary for 24 hours, and then stirred for 15 minutes with the Hamilton beach mixer again, thus obtaining a comparative excavation-stabilizing slurry (1a), of which the funnel viscosity and the fluid loss were measured by the below-mentioned methods. Results are shown in Table 2.

The comparative excavation-stabilizing slurries (1b)∼(1e) were obtained to measure the funnel viscosity and the fluid loss in the same way as above except that the Telcellulose DS-P was weighed such that its solid content in 600 ml in final total amount of each of the excavation-stabilizing slurries would be 0.1, 0.2, 0.3 and 0.5 weight % respectively. Results are shown in Table 2.

### - COMPARATIVE EXAMPLE 2-

Comparative excavation-stabilizing slurries (2a)∼(2e) were obtained to measure the funnel viscosity and the fluid loss in the same way as of Comparative Example 1 except that the Telcellulose DS-P was replaced with Telpolymer 30 (made by Telnite Co., Ltd.). Results are shown in Table 2.

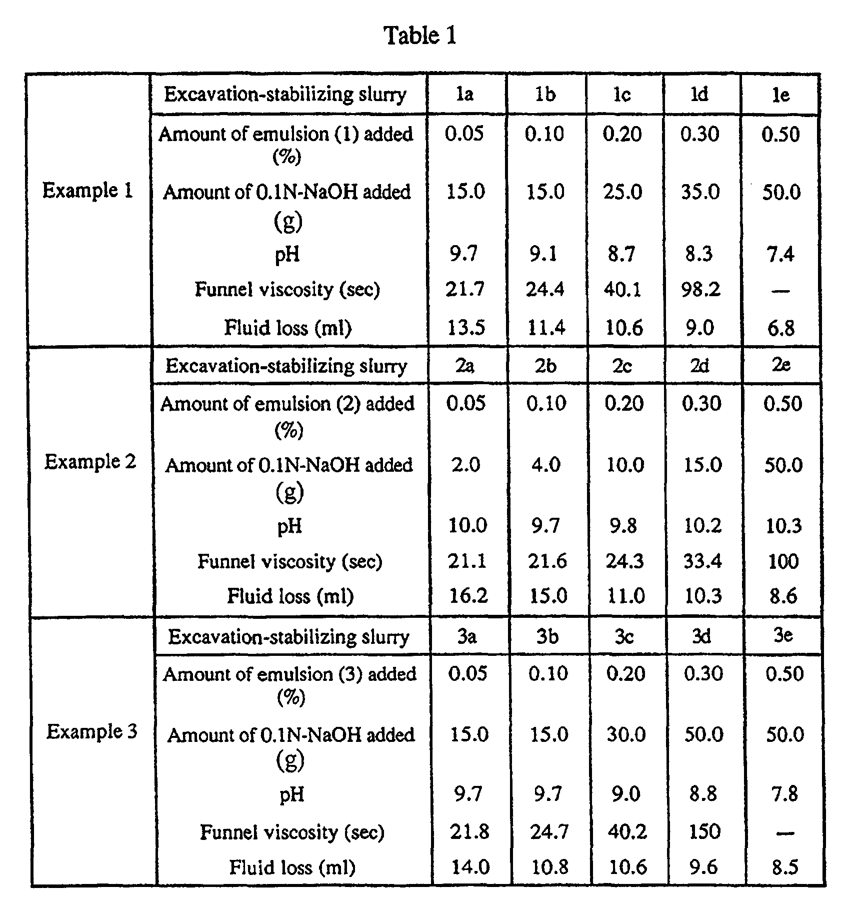

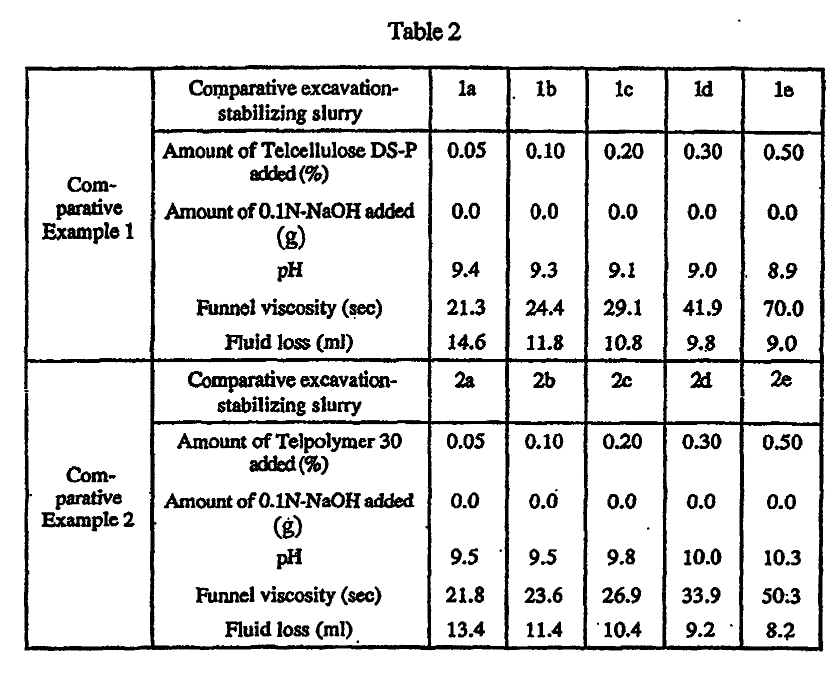

Various details of the invention may be changed without departing from the scope of the claims. Furthermore, the foregoing description of the preferred embodiments according to the present invention is provided for the purpose of illustration only, and not for the purpose of limiting the invention as defined by the appended claims.

## Claims

1. Use of a slurry comprising an emulsion containing a polymer which thickens with an alkaline substance, as an excavation-stabilizing slurry which during an excavation operation of the ground to form a trench is filled into the trench to stabilize the walls of the trench.

2. Use of An excavation-stabilizing slurry according to claim 1, wherein the polymer is a polymer containing a carboxyl group.

3. Use of an excavation-stabilizing slurry according to claim 1 or 2, wherein the emulsion is an emulsion having the thickening properties such that an aqueous solution, as prepared by diluting the emulsion with water to adjust its solid content to 1 weight %, will have a viscosity of 1∼1,000 wPa.s, and that if the alkaline substance is added to this aqueous solution to adjust its pH to 9, the viscosity will increase to 2∼10,000 times.

4. Use of An excavation-stabilizing slurry according to any one of claims 1 to 3 which further comprises a clay mineral.

5. Use of an excavation-stabilizing slurry according to any one of claims 1 to 4, which further comprises an antifoaming agent.

6. Use of an excavation-stabilizing slurry according to any one of claims 1 to 5, which futher comprises the alkaline substance.

7. An excavation method comprising the steps of excavating the ground to form a trench and, during excavation, filling the resulting trench with an excavation-stabilizing slurry which prevents a collapse of the trench walls, wherein said excavation-stabilizing slurry comprises an emulsion containing a polymer which thickens with an alkaline substance.

## Patentansprüche

1. Verwendung einer Suspension, die eine Emulsion aufweist, die ein in Gegenwart einer alkalischen Substanz eindickendes Polymer enthält, als Grabungs-stabilisierende Suspension, die während eines Grabungsvorgangs in der Erde zur Bildung eines Grabens in den Graben gefüllt wird, um die Grabenwände zu stabilisieren.

2. Verwendung einer Grabungs-stabilisierenden Suspension nach Anspruch 1, bei der das Polymer ein eine Carboxylgruppe enthaltendes Polymer ist.

3. Verwendung einer Grabungs-stabilisierenden Suspension nach Anspruch 1 oder 2, bei der die Emulsion eine Emulsion mit solchen Eindick-Eigenschaften ist, daß eine durch Verdünnung der Emulsion mit Wasser auf einen Feststoffgehalt von 1 Gew.-% erhaltene wässrige Lösung eine Viskosität von 1 - 1.000 mPa.s aufweist, und daß bei Zugabe einer alkalischen Substanz zu dieser wässrigen Lösung zur Einstellung ihres pH auf 9 die Viskosität auf das 2 - 10.000-fache zunimmt.

4. Verwendung einer Grabungs-stabilisierenden Suspension nach einem der Ansprüche 1 bis 3, die ferner ein Tonmineral enthält.

5. Verwendung einer Grabungs-stabilisierenden Suspension nach einem der Ansprüche 1 bis 4, die ferner ein Anti-Schaummittel enthält.

6. Verwendung einer Grabungs-stabilisierenden Suspension nach einem der Ansprüche 1 bis 5, die ferner die alkalische Substanz enthält.

7. Grabungsverfahren mit den Schritten des Ausgrabens der Erde zur Bildung eines Grabens und, während des Ausgrabens, Füllen des entstehenden Grabens mit einer Grabungs-stabilisierenden Suspension, die ein Einfallen der Grabenwände verhindert, wobei die Grabungs-stabilisierende Suspension eine Emulsion mit einem Polymer, der in Gegenwart einer alkalischen Substanz eindickt, enthält.

## Revendications

1. Utilisation d'une boue comprenant une émulsion contenant un polymère qui s'épaissit avec une substance alcaline, comme boue stabilisatrice d'excavation dont, durant une opération d'excavation du sol pour former une tranchée, la tranchée est remplie afin de stabiliser les parois de la tranchée.

2. Utilisation d'une boue stabilisatrice d'excavation selon la revendication 1, dans laquelle le polymère est un polymère contenant un groupe carboxyle.

3. Utilisation d'une boue stabilisatrice d'excavation selon la revendication 1 ou 2, dans laquelle l'émulsion est une émulsion possédant des propriétés épaississantes telles qu'une solution aqueuse, préparée par dilution de l'émulsion avec de l'eau pour ajuster son contenu solide à 1 % en poids, possédera une viscosité de 1∼1 000 mPa.s et que, si la substance alcaline est ajoutée à cette solution aqueuse pour ajuster son pH à 9, la viscosité est multipliée par 2∼10 000.

4. Utilisation d'une boue stabilisatrice d'excavation selon l'une quelconque des revendications 1 à 3, qui comprend en outre un minéral argileux.

5. Utilisation d'une boue stabilisatrice d'excavation selon l'une quelconque des revendications 1 à 4, qui comprend en outre un agent antimousse.

6. Utilisation d'une boue stabilisatrice d'excavation selon l'une quelconque des revendications 1 à 5, qui comprend en outre la substance alcaline.

7. Procédé d'excavation comprenant les étapes d'excavation du sol pour former une tranchée et, durant l'excavation, le remplissage de la tranchée résultante par une boue stabilisatrice d'excavation qui prévient l'affaissement des parois de la tranchée, dans lequel ladite boue stabilisatrice d'excavation comprend une émulsion contenant un polymère qui s'épaissit avec une substance alcaline.
